(19) Europäisches Patentamt
European Patent Office
Office européen des brevets

(11) EP 4 249 106 A1

(12) EUROPEAN PATENT APPLICATION

(43) Date of publication:
**27.09.2023 Bulletin 2023/39**

(21) Application number: **23159408.6**

(22) Date of filing: **01.03.2023**

(51) International Patent Classification (IPC):
***B01D 63/10*** (2006.01) ***B01D 67/00*** (2006.01)
***B01D 69/12*** (2006.01) ***B01D 71/38*** (2006.01)
***B01D 71/56*** (2006.01)

(52) Cooperative Patent Classification (CPC):
**B01D 63/103; B01D 63/1031; B01D 67/0088; B01D 69/12; B01D 71/381; B01D 71/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022047884**
**26.07.2022 JP 2022118544**

(71) Applicant: **Nitto Denko Corporation**
**Ibaraki-shi, Osaka 567-8680 (JP)**

(72) Inventor: **MIYABE, Tomotsugu**
**IBARAKI-SHI, OSAKA, 567-8680 (JP)**

(74) Representative: **Cabinet Beau de Loménie**
**158, rue de l'Université**
**75340 Paris Cedex 07 (FR)**

# (54) COMPOSITE SEMIPERMEABLE MEMBRANE AND SPIRAL MEMBRANE ELEMENT

(57) Provided are a composite semipermeable membrane capable of enhancing adhesion between a separation functional layer provided with a coating layer and a protective tape while maintaining an effect of the coating layer to some extent, and a spiral membrane element using the composite semipermeable membrane.

A composite semipermeable membrane includes: a porous support; a separation functional layer formed on the porous support; and a coating layer provided on a surface of the separation functional layer, the coating layer having different surface roughnesses due to different adhesion amounts of a coating material depending on locations. The composite semipermeable membrane has a coating layer-side surface on which a glossy portion having a surface roughness Ra of 30 nm or less and a non-glossy portion having a surface roughness Ra of 50 nm or more are provided.

Fig.3

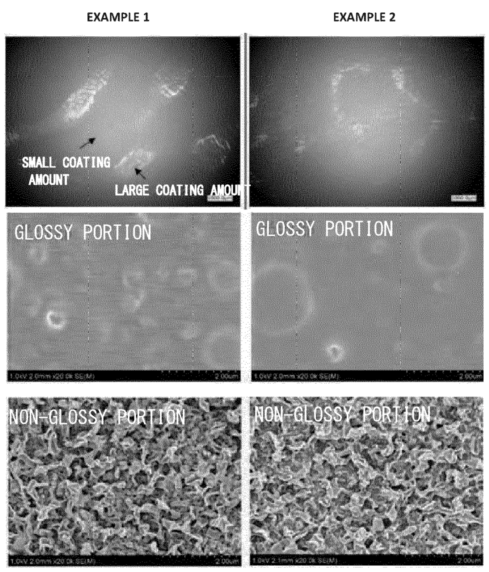




Processed by Luminess, 75001 PARIS (FR)

## Description

### BACKGROUND OF THE INVENTION

#### Field of the Invention

The present invention relates to a composite semipermeable membrane including a coating layer on the surface of a separation functional layer, and a spiral membrane element (hereinafter, may be abbreviated as a "membrane element") using the composite semipermeable membrane.

#### Description of the Related Art

A composite semipermeable membrane is called an RO (reverse osmosis) membrane, an NF (nano-filtration) membrane, or an FO (forward osmosis) membrane depending on the filtration properties or treatment methods, and is usable for the production of ultrapure water, seawater desalination, desalinization of brackish water, and reuse of wastewater, and the like.

Examples of a composite semipermeable membrane commonly used industrially include a composite semipermeable membrane in which a skin layer containing a polyamide-based resin obtained by reacting a polyfunctional amine component with a polyfunctional acid halide component is formed as a separation functional layer on the surface of a porous support. On the surface of the separation functional layer of the composite semipermeable membrane, a coating layer containing various hydrophilic resins may be provided for the purpose of improving durability at the time of processing into a membrane element, improving fouling resistance (contamination resistance), improving a separation function and permeation performance, and the like.

For example, Patent Document 1 proposes a reverse osmosis composite membrane in which a surface layer of a separation functional layer is coated with polyvinyl alcohol which is an electrically neutral organic polymer, is insoluble in water at 25°C, is soluble in water at 80°C, and has a saponification degree of 99% or more.

Patent Document 2 proposes a composite semipermeable membrane in which a separation functional layer is treated with a negatively charged hydrophilic polymer containing a functional group having a positive charge and a functional group having a negative charge.

Meanwhile, conventionally, as a separation membrane element used for reverse osmosis filtration or the like, for example, a spiral membrane element is known, in which a unit including a supply-side flow-channel member that guides a supply-side fluid to the surface of a separation membrane, a separation membrane that separates the supply-side fluid, and a permeation-side flow-channel member that guides a permeation-side fluid passing through the separation membrane and separated from the supply-side fluid to a central pipe is wound around a perforated central pipe (Patent Documents 3 and 4). In the unit, a structure in which the separation membrane is bent around the central pipe so that a separation functional layer is on the inner side is common. A protective tape (adhesive tape) for protecting the separation functional layer while reinforcing the separation membrane may be attached to the bent portion.

#### Prior Art Document

#### Patent Documents

Patent Document 1: International Publication No. 1997/034686
Patent Document 2: International Publication No. 2018/124103
Patent Document 3: JP-A-2000-354743
Patent Document 4: JP-A-2006-68644

### SUMMARY OF THE INVENTION

However, according to studies made by the present inventors, it was found that when the coating layer is provided on the surface of the membrane, adhesion between the separation functional layer and the protective tape (adhesive tape) used for the bent portion at the time of assembling the spiral membrane element is reduced, and a reinforcing effect provided by the protective tape is less likely to be obtained.

Therefore, an object of the present invention is to provide a composite semipermeable membrane capable of enhancing adhesion between a separation functional layer provided with a coating layer and a protective tape while maintaining the effect of the coating layer to some extent, and a spiral membrane element using the composite semipermeable membrane.

As a result of intensive studies to solve the above problems, the present inventors found that the adhesion is reduced by the smoothed surface provided by the coating layer, and reduction in the adhesion can be improved by controlling the adhesion amount of the coating material, thereby completing the present invention. That is, the present invention includes the following aspects.

[1] A composite semipermeable membrane including:

a porous support;
a separation functional layer formed on the porous support; and
a coating layer provided on a surface of the separation functional layer, the coating layer having different surface roughnesses due to different adhesion amounts of a coating material depending on locations,
wherein the composite semipermeable membrane has a coating layer-side surface on which a glossy portion having a surface roughness Ra of 30 nm or less and a non-glossy portion having a surface roughness Ra of 50 nm or more are provided.

According to the composite semipermeable membrane of the present invention, the coating layer is provided on the surface of the separation functional layer, the coating layer having different surface roughnesses due to different adhesion amounts of the coating material depending on locations, and the composite semipermeable membrane has the coating layer-side surface on which the glossy portion having the surface roughness Ra of 30 nm or less and the non-glossy portion having the surface roughness Ra of 50 nm or more are provided, so that the presence of the glossy portion and the non-glossy portion can enhance the adhesion between the separation functional layer provided with the coating layer and the protective tape while maintaining the effect of the coating layer to some extent.

[2] The composite semipermeable membrane according to [1], wherein the composite semipermeable membrane includes a surface roughness adjustment area having the glossy portion and the non-glossy portion at an area percentage of 1 : 4 to 4 : 1 at least in an attachment area to which a protective tape is attached.

As described above, by providing the surface roughness adjustment area in which the non-glossy portion having a small adhesion amount of the coating material and a larger surface roughness is present at a specific area percentage in the attachment area to which the protective tape is attached, the adhesiveness between the separation functional layer and the protective tape can be more reliably improved.

[3] The composite semipermeable membrane according to [1] or [2], wherein the surface roughness Ra of the glossy portion is 5 to 25 nm, and the surface roughness Ra of the non-glossy portion is 50 to 80 nm.

The formation of the glossy portion and the non-glossy portion can more reliably maintain the effect of the coating layer and improve the adhesiveness between the separation functional layer and the protective tape.

[4] The composite semipermeable membrane according to any one of [1] to [3], comprising a limited roughness glossy portion having a surface roughness Ra of 5 to 25 nm and a limited roughness non-glossy portion having a surface roughness Ra of 50 to 80 nm, each provided on the coating layer-side surface,
wherein an area ratio of the limited roughness glossy portion to a total area of the limited roughness glossy portion and the limited roughness non-glossy portion is 5 to 50%.

The limited roughness glossy portion at the above area ratio makes it possible to more reliably maintain the effect of the coating layer and improve the adhesiveness between the separation functional layer and the protective tape.

[5] The composite semipermeable membrane according to any one of [1] to [4], wherein the separation functional layer is formed of a polyamide-based resin, and the coating material contains a hydrophilic resin.

The surface roughness before forming the coating layer can be adjusted by the interfacial polymerization of the polyamide-based resin, and the adhesion amount of the coating material can be easily adjusted by adjusting the concentration or the composition of the hydrophilic resin using it.

[6] A spiral membrane element including: a perforated central pipe; a roll including a separation membrane wound around the central pipe and having a bent portion at an inner circumferential-side end portion; and a protective tape attached along the bent portion,

wherein the separation membrane is a composite semipermeable membrane including a porous support and a separation functional layer formed on the porous support,
a coating layer is provided on a surface of the separation functional layer, the coating layer having different surface roughnesses due to different adhesion amounts of a coating material depending on locations, the composite semipermeable membrane has a coating layer-side surface on which a glossy portion having a surface roughness Ra of 30 nm or less and a non-glossy portion having a surface roughness Ra of 50 nm or more are provided, and
the protective tape is attached to a coating layer side-surface of the bent portion of the separation membrane.

According to the spiral membrane element of the present invention, the coating layer is provided on the surface of the separation functional layer, the coating layer having different surface roughnesses due to different adhesion amounts of the coating material depending on locations, and the composite semipermeable membrane has the coating layer-side surface on which the glossy portion having the surface roughness Ra of 30 nm or less and the non-glossy portion having the surface roughness Ra of 50 nm or more are provided, so that the presence of the glossy portion and the non-glossy portion can enhance adhesion between the separation functional layer provided with the coating layer and the protective tape while maintaining the effect of the coating layer to some extent.
[7] The spiral membrane element according to [6], wherein the separation membrane includes a surface roughness adjustment area having the glossy portion and the non-glossy portion at an area percentage of 1 : 4 to 4 : 1 at least in an attachment area to which the protective tape is attached.
As described above, by providing the surface roughness adjustment area in which the non-glossy portion having a small adhesion amount of the coating material and a larger surface roughness is present at a specific area percentage in the attachment area to which the protective tape is attached, the adhesiveness between the separation functional layer and the protective tape can be more reliably improved.
[8] The spiral membrane element according to [6] or [7], comprising a limited roughness glossy portion having a surface roughness Ra of 5 to 25 nm and a limited roughness non-glossy portion having a surface roughness Ra of 50 to 80 nm, each provided on the coating layer-side surface,
wherein an area ratio of the limited roughness glossy portion to a total area of the limited roughness glossy portion and the limited roughness non-glossy portion is 5 to 50%.
The limited roughness glossy portion at the above area ratio makes it possible to more reliably maintain the effect of the coating layer and improve the adhesiveness between the separation functional layer and the protective tape.

Effect of the Invention

The present invention can provide a composite semipermeable membrane capable of enhancing adhesion between a separation functional layer provided with a coating layer and a protective tape while maintaining an effect of the coating layer to some extent, and a spiral membrane element using the composite semipermeable membrane.

BRIEF DESCRIPTION OF THE DRAWINGS

Fig. 1 is a perspective view schematically showing an example of a spiral membrane element of the present invention;
Fig. 2A is an assembly plan view showing an example of a separation membrane that can be used in the spiral membrane element of the present invention;
Fig. 2B is an assembly perspective view showing an example of a separation membrane unit that can be used in the spiral membrane element of the present invention;
Fig. 3 shows micrographs of the coating layer sides of composite semipermeable membranes obtained in Examples 1 and 2, and shows a micrograph of a wide area in the upper panel, a high-magnification electron micrograph of a glossy portion in the middle panel, and a high-magnification electron micrograph of a non-glossy portion in the lower panel;
Fig. 4 shows micrographs of the coating layer side of a composite semipermeable membrane obtained in Example 3, and shows a micrograph of a wide area in the upper panel, a high-magnification electron micrograph of a glossy portion in the middle panel, and a high-magnification electron micrograph of a non-glossy portion in the lower panel; and
Fig. 5 shows micrographs of the coating layer side of a composite semipermeable membrane obtained in Comparative Example 1, and shows a micrograph of a wide area in the upper panel, a high-magnification electron micrograph of an intermediate portion having relatively small irregularities in the middle panel, and a high-magnification electron micrograph of an intermediate portion having relatively large irregularities in the lower panel.

DETAILED DESCRIPTION OF THE PREFERRED EMBODIMENTS

Hereinafter, embodiments of the present invention will be described.

(Composite semipermeable membrane of the present invention)

A composite semipermeable membrane of the present invention includes: a porous support; a separation functional layer formed on the porous support; and a coating layer provided on a surface of the separation functional

layer, the coating layer having different surface roughnesses due to different adhesion amounts of a coating material depending on locations. The composite semipermeable membrane has a coating layer-side surface on which a glossy portion having a surface roughness Ra of 30 nm or less and a non-glossy portion having a surface roughness Ra of 50 nm or more are provided.

Even when a protective tape is attached to the coating layer-side surface, and the composite semipermeable membrane having a portion to which the protective tape is attached is used in a bent state, adhesion between the separation functional layer provided with the coating layer and the protective tape can be enhanced. The coating layer includes a type in which the coating layer is present even when the composite semipermeable membrane is used and a type in which the coating layer is removed when the composite semipermeable membrane is used, but the present invention is effective in any case.

That is, in the latter case, for example, after a membrane element is prepared using a composite semipermeable membrane with a coating layer, washing water is then caused to pass through the membrane element to allow the coating layer on the separation functional layer to be removed, but the coating layer is not in direct contact with the washing water at the portion to which the protective tape is attached, so that the coating layer is hardly removed to allow the adhesion between the separation functional layer and the protective tape to be maintained.

A surface roughness adjustment area having the glossy portion and the non-glossy portion may be provided only in an attachment area to which the protective tape is attached, but may be provided at least in the attachment area to which the protective tape is attached of the composite semipermeable membrane. The surface roughness adjustment area is preferably provided over the entire composite semipermeable membrane from the viewpoint of simplifying the production process. First, the composite semipermeable membrane provided with the coating layer will be described.

(Composite semipermeable membrane)

The composite semipermeable membrane provided with the coating layer may include the porous support and the separation functional layer formed on the porous support, and the porous support may have a surface shape capable of supporting the separation functional layer.

The material for forming the separation functional layer is not particularly limited, and examples thereof include cellulose acetate, ethyl cellulose, polyether, polyester, and polyamide. In particular, the separation functional layer is preferably a separation functional layer containing a polyamide-based resin obtained by polymerizing a polyfunctional amine component and a polyfunctional acid halogen component.

The polyfunctional amine component is a polyfunctional amine having two or more reactive amine groups. Examples thereof include aromatic, aliphatic, and alicyclic polyfunctional amines.

Examples of the aromatic polyfunctional amines include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine.

Examples of the aliphatic polyfunctional amines include ethylenediamine, propylenediamine, tris(2-aminoethyl)amine, and n-phenyl-ethylenediamine.

Examples of the alicyclic polyfunctional amines include 1,3-diaminocyclohexane, 1,2-diaminocyclohexane, 1,4-diaminocyclohexane, piperazine, 2,5-dimethylpiperazine, and 4-aminomethylpiperazine.

These polyfunctional amines may be used singly or in any combination of two or more thereof. In order to obtain a separation functional layer having high salt-rejection performance, it is preferred to use an aromatic polyfunctional amine.

The polyfunctional acid halide component is a polyfunctional acid halide having two or more reactive carbonyl groups.

Examples of the polyfunctional acid halide include aromatic, aliphatic, and alicyclic polyfunctional acid halides.

Examples of the aromatic polyfunctional acid halides include trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, and chlorosulfonylbenzene dicarboxylic acid dichloride.

Examples of the aliphatic polyfunctional acid halides include propanedicarboxylic acid dichloride, butanedicarboxylic acid dichloride, pentanedicarboxylic acid dichloride, propanetricarboxylic acid trichloride, butanetricarboxylic acid trichloride, pentanetricarboxylic acid trichloride, glutaryl halides, and adipoyl halides.

Examples of the alicyclic polyfunctional acid halides include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, and tetrahydrofurandicarboxylic acid dichloride.

These polyfunctional acid halides may be used singly or in any combination of two or more thereof. In order to obtain a separation functional layer having high salt-rejection performance, it is preferred to use an aromatic polyfunctional

acid halide. It is also preferred to use, as at least one component of the polyfunctional acid halide components, a polyfunctional acid halide having tri or higher polyfunctionalities to form a crosslinked structure.

In order to improve the performance of the separation functional layer containing a polyamide-based resin, a polymer such as polyvinyl alcohol, polyvinylpyrrolidone, or polyacrylic acid, and a polyhydric alcohol such as sorbitol or glycerin, and the like may be copolymerized.

The porous support that supports the separation functional layer is not particularly limited as long as the porous support can support the separation functional layer. Usually, an ultrafiltration membrane having micro pores having an average pore diameter of about 10 to 500 Å is preferably used. Examples of materials for forming the porous support include various materials such as polysulfones; polyarylether sulfones (for example, polyether sulfone); polyimides; polyetherimides; and polyvinylidene fluorides. Polysulfones and polyarylether sulfones are particularly preferably used from the viewpoint of being chemically, mechanically, and thermally stable.

The thickness of such a porous support is usually about 25 to 125 μm, and preferably about 40 to 75 um, and is not necessarily limited thereto. The porous support is preferably reinforced by backing with a base material such as a woven fabric or a nonwoven fabric.

Methods for forming the separation functional layer containing the polyamide-based resin on the surface of the porous support are not particularly limited, and any known methods may be used. Examples thereof include an interfacial condensation method, a phase separation method, and a thin membrane coating method. Specifically, the interfacial condensation method is a method in which a separation functional layer is formed by bringing an aqueous amine solution containing a polyfunctional amine component into contact with an organic solution containing a polyfunctional acid halide component to perform interfacial polymerization, and the separation functional layer is placed on a porous support, or a method in which a separation functional layer of a polyamide-based resin is directly formed on a porous support by the interfacial polymerization on the porous support. The conditions and the like of the interfacial condensation method are described in detail in JP-A-58-24303 and JP-A-1-180208 and the like, and these known techniques can be appropriately adopted.

The thickness of the separation functional layer formed on the porous support is not particularly limited, and is usually about 0.05 to 2 μm, and preferably 0.1 to 1 μm.

The surface roughness Ra of the separation functional layer in the composite semipermeable membrane before the coating layer is provided is preferably 55 nm or more, and more preferably 60 nm or more. By setting the surface roughness Ra as described above, the non-glossy portion having the surface roughness Ra of 50 nm or more can be easily formed, and the adhesion between the separation functional layer provided with the coating layer and the protective tape can be further enhanced. By increasing the surface roughness of the membrane, the effective area of the separation functional layer that actually separates salts and the like increases, so that water permeability can be increased while a salt rejection is maintained.

The surface roughness Ra of the separation functional layer is preferably 80 nm or less, and more preferably 70 nm or less from the viewpoint of easily forming the glossy portion having a surface roughness Ra of 30 nm or less.

Herein, the surface roughness Ra means a planar surface roughness, and is defined by the following formula (Math 1).

[Math 1]

Average surface roughness: Ra

$$Ra = \frac{1}{S}\int_0^a\int_0^b |f(x, y) - z_0|\,dx\,dy$$

The plane surface roughness can be calculated using a value measured using an atomic force microscope (AFM). An average surface roughness (Ra) is calculated by expanding to three-dimension in order that a center line average roughness Ra defined in JIS B0601 is applicable to a measured surface, and is a value obtained by averaging absolute values of deviations of a reference surface to a specified surface. Here, the measured surface refers to a surface shown by all of measured data. The specified surface is a surface to be subjected to roughness measurement, and refers to a specific portion (specified area: 5 μm×5 μm) specified by a clip in the measured surface. The reference surface refers to a plane represented by $Z=Z_0$ when the average value of heights of the specified surface is $Z_0$.

A method for producing the composite semipermeable membrane having a surface roughness Ra as described above is described in detail in JP-A-H9-85068 and JP-A-H7-8770 and the like.

Specifically, for example, in a method for producing a composite reverse osmosis membrane by forming a polyamide-based skin layer (separation functional layer) by means including a step of coating a porous support with a solution A containing a compound having two or more reactive amino groups and a step of bringing a solution B containing a polyfunctional acid halide into contact with the solution A phase, the composite semipermeable membrane having the surface roughness Ra as described above can be produced by a production method in which a difference in solubility parameter between the solution A and the solution B is 7 to 15 $(cal/cm^3)^{1/2}$.

Also, for example, in a method for producing a composite reverse osmosis membrane in which a negatively charged crosslinked polyamide-based skin layer is formed by means including a step of coating a porous support with a solution A having a compound having two or more reactive amino groups, and a step of bringing a solution B containing a polyfunctional acid halide into contact with the solution A layer, and the surface of the skin layer is coated with a crosslinked layer of an organic polymer having a positively fixed charged group, a compound having a solubility parameter of 8 to 14 $(cal/cm^3)^{1/2}$ is present in at least one selected from the solution A, the solution B, and the microporous support, whereby the composite reverse osmosis membrane having high permeability can be produced.

More specifically, the solution A is a mixed solution of water and an alcohol selected from ethanol, propanol, butanol, and pentanol, or a mixed solution of water and a nitrogen compound, and the compound having two or more reactive amino groups may be at least one compound selected from m-phenylenediamine, p-phenylenediamine, 1,3,5-triaminobenzene, 1,2,4-triaminobenzene, 3,5-diaminobenzoic acid, 2,4-diaminotoluene, 2,4-diaminoanisole, amidol, xylylenediamine, ethylenediamine, propylenediamine, tris(2-aminoethyl)amine, 1,3-diaminocyclohexane, 1,2-diaminocyclohexane, 1,4-diaminocyclohexane, piperazine, 2,5-dimethylpiperazine, and 4-aminomethylpiperazine, and the like.

In order to improve the salt-rejection property, water permeability, and antioxidant resistance and the like of the composite semipermeable membrane, various conventionally known treatments may be applied to the composite semipermeable membrane.

(Coating Layer)

A coating material for forming the coating layer preferably contains a hydrophilic resin, and the hydrophilic resin may not be chemically bonded to the separation functional layer or may be partially chemically bonded to the separation functional layer.

Examples of the coating material include (1) a water-soluble hydrophilic resin, (2) a product obtained by crosslinking a water-soluble compound or a water-soluble resin or partially reacting the water-soluble compound or the water-soluble resin with a separation functional layer, (3) a poorly water-soluble or water-insoluble hydrophilic resin, and (4) a combination thereof. Among them, (3) the poorly water-soluble or water-insoluble hydrophilic resin is preferable from the viewpoint of the simplicity of the formation of the coating layer, and the like.

(1) As the water-soluble hydrophilic resin, an anionic polyvinyl alcohol is preferable. The anionic polyvinyl alcohol is a polyvinyl alcohol having an anionic functional group, and examples of the anionic functional group include a carboxyl group, a sulfonic acid group, and a phosphoric acid group. Of these, a carboxyl group or a sulfonic acid group is preferable.

Examples of commercially available products of the anionic polyvinyl alcohol include KL-118, KL-318, KL-506, KM-118, and KM-618 manufactured by Kuraray Co., Ltd., and GOHSENEX CKS50, GOHSENEX T-330H, and GOHSENEX T-350 manufactured by Nippon Synthetic Chemical Industry Co., Ltd.

(2) Examples of the product obtained by crosslinking the water-soluble compound or the water-soluble resin or partially reacting the water-soluble compound or the water-soluble resin with the separation functional layer include a product obtained by crosslinking using a crosslinking agent that reacts with an anionic group or the like of (1) a water-soluble hydrophilic resin, or a crosslinking agent that reacts with a nonionic hydrophilic group of a water-soluble compound or a water-soluble resin having the nonionic hydrophilic group (hydroxyl group or the like). Another examples thereof include a hydrophilic resin having a functional group capable of reacting with a functional group (for example, a carboxyl group or an amino group) partially remaining in the separation functional layer directly or using a crosslinking agent.

(3) As the poorly water-soluble or the water-insoluble hydrophilic resin, it is preferred to use a hydrophilic polymer having a nonionic hydrophilic group. Examples of the hydrophilic polymer having a nonionic hydrophilic group include a polyvinyl alcohol, a saponified polyethylene-vinyl acetate copolymer, polyvinyl pyrrolidone, hydroxypropyl cellulose, and polyethylene glycol. Among them, a polyvinyl alcohol having an average polymerization degree of 2000 to 3000 and a saponification degree of 99% or more is preferably used. When the polyvinyl alcohol is used, resistance to contaminating organic substances is increased by the action of a hydroxyl group which is a nonionic hydrophilic group, and the adsorption of contaminants to a thin membrane can be suppressed, so that a decrease in a permeation flux can be effectively suppressed.

(3) As the poorly water-soluble or water-insoluble hydrophilic resin, it is also possible to use an amphoteric

hydrophilic polymer, and hydrophilic resins having an anionic group and a cationic group are preferable. The cationic group is a group having a cation (group having a positive charge) or a group that is variable depending on the surrounding environment to have a cation. Specific examples of the cationic group include an amino group, an ammonium group, a sulfonium group, and a phosphonium group. The anionic group is a group having an anion (group having a negative charge) or a group that is variable depending on the surrounding environment to have an anion. Specific examples of the anionic group include a carboxyl group, a phosphonic acid group, a sulfuric acid group, and a phosphoric acid group. The amphoteric hydrophilic polymer more preferably has a carboxyl group and an ammonium group.

The amphoteric hydrophilic polymer has a reactive functional group such as an alkoxysilyl group, so that a bonding force with the separation functional layer can be increased. Examples of such a reactive functional group include a trimethoxysilylpropyl group, a methyldimethoxysilylpropyl group, a methyldiethoxysilylpropyl group, a triethoxysilylpropyl group, a (3-ethyloxetane-3-yl)methyl group, and an N-succinimidyl group.

(3) As the poorly water-soluble or the water-insoluble hydrophilic resin, a hydrophilic polymer having a cationic group can also be used, which makes it possible to reduce a decrease in water permeability when brought into contact with a stock solution containing a cationic substance. Examples of the hydrophilic polymer having a cationic group include a polymer having a repeating unit represented by the following formula (1).

[Formula 1]

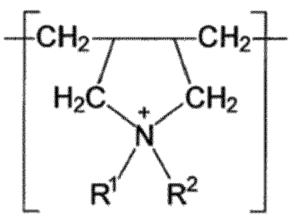

...(1)

(In the formula (1), $N^+$ is a nitrogen atom constituting a quaternary ammonium cation, and $R^1$ and $R^2$ are each independently a substituent containing a carbon atom bonded to the nitrogen atom.)

The coating material forming the coating layer may contain a metal filler or an inorganic salt in addition to the hydrophilic resin.

(Forming method for coating layer)

As a general forming method for a coating layer, a coating material containing a hydrophilic resin or the like is dissolved or dispersed in a solvent to prepare a coating liquid, and the coating liquid is applied onto a separation functional layer, and dried to form the coating layer. Examples of the applying method include immersion, spraying, coating, and showering.

As the solvent, in addition to water, an organic solvent that does not deteriorate the performance of the separation functional layer and the like may be used in combination. In particular, in order to adjust the solubility of the hydrophilic resin, it is preferred to use a mixed solvent containing water and other solvents. Examples of the organic solvent include aliphatic alcohols such as methanol, ethanol, isopropanol, and butanol; and lower alcohols such as methoxymethanol and methoxyethanol.

The concentration of the hydrophilic resin (in the case of a plurality of hydrophilic resins, the total concentration of the hydrophilic resins) in the coating liquid is preferably 0.01 to 5% by mass, and more preferably 0.05 to 3% by mass.

The temperature of the coating liquid at the time of coating is not particularly limited, but is preferably 10 to 90°C, and more preferably 10 to 60°C from the viewpoint of preventing the deterioration of the separation functional layer, and the ease of handling, and the like.

A temperature at the time of performing the drying treatment after applying the coating liquid onto the separation functional layer is not particularly limited, but is usually about 60 to 160°C, and preferably 80 to 150°C. It is also possible to perform preliminary drying at a lower temperature (for example, room temperature: 25°C) .

The coating amount of the coating layer can be appropriately set according to the purpose of providing the coating layer, and for example, the hydrophilic resin can be coated such that the coating amount of the hydrophilic resin is 10 mg/m$^2$ or more and 300 mg/m$^2$ or less.

In the present invention, in order to realize the surface characteristics of the composite semipermeable membrane as described below, the following method is effective.

First, in order to generate the glossy portion and the non-glossy portion on the coating layer-side surface, a method for reducing the uniformity of the dissolved state of the hydrophilic resin in the coating liquid or a method for

reducing the uniformity of the applying liquid when the applying liquid is applied and dried is effective. Examples of the method for reducing the uniformity of the dissolved state of the hydrophilic resin in the coating liquid include a method in which the hydrophilic resin is hardly dissolved in the coating liquid by adjusting the composition of a solvent, a method in which a plurality of kinds of hydrophilic resins are mixed to make the dissolved state of the hydrophilic resin non-uniform, and a method in which the concentration of the hydrophilic resin is increased to make the dissolved state of the hydrophilic resin non-uniform. Examples of the method for reducing the uniformity of the applying liquid when the applying liquid is applied and dried include a method in which the drying speed is reduced to generate convection, and a method in which the surface of the applying liquid is disturbed by blowing air from the upper surface of the applying liquid during drying.

More specific examples thereof include a method in which the content of a solvent such as an alcohol other than water is reduced to reduce the solubility of the hydrophilic resin, a method in which an ionic hydrophilic resin such as an amphoteric hydrophilic polymer and a nonionic hydrophilic resin are mixed, and a method in which the concentration of the hydrophilic resin is increased. For example, in the case of lowering the solubility of the hydrophilic resin by lowering the content of an alcohol such as IPA, the alcohol is preferably contained in an amount of 2 to 40% by mass, and more preferably 5 to 35% by mass in the coating liquid for forming the coating layer.

Examples of the method for adjusting the area percentage of the glossy portion to the non-glossy portion include a method for adjusting the total amount of the hydrophilic resin to be coated, a method for adjusting the concentration of the hydrophilic resin in the coating liquid, a method for adjusting the viscosity of the coating liquid, and a method for adding a surfactant.

(Surface characteristics of composite semipermeable membrane)

The composite semipermeable membrane of the present invention includes a coating layer provided on a surface of the separation functional layer, the coating layer having different surface roughnesses due to different adhesion amounts of a coating material depending on locations. The composite semipermeable membrane has a coating layer-side surface on which a glossy portion having a surface roughness Ra of 30 nm or less and a non-glossy portion having a surface roughness Ra of 50 nm or more are provided.

From the viewpoint of enhancing the adhesion between the separation functional layer provided with the coating layer and the protective tape while maintaining the effect of the coating layer to some extent, it is preferable that the surface roughness Ra of the glossy portion is 5 to 25 nm, and the surface roughness Ra of the non-glossy portion is 50 to 80 nm. It is more preferable that the surface roughness Ra of the glossy portion is 5 to 15 nm, and the surface roughness Ra of the non-glossy portion is 60 to 70 nm.

From the viewpoint of enhancing the adhesion between the separation functional layer provided with the coating layer and the protective tape while maintaining the effect of the coating layer to some extent, the area percentage (area ratio) of the glossy portion to the non-glossy portion is preferably 1 : 4 to 4 : 1, more preferably 3 : 7 to 7 : 3, and still more preferably 4 : 6 to 6 : 4.

In the measurement of the area ratio, the surface roughness Ra is calculated for each of a plurality of randomly selected areas. The percentage of the number of areas of the glossy portion having a surface roughness Ra of 30 nm or less to that of the non-glossy portion having a surface roughness Ra of 50 nm or more is obtained, so that the area percentage of the glossy portion to the non-glossy portion can be determined. It is also possible to obtain the area percentage of the glossy portion to the non-glossy portion corresponding to predetermined brightness from the results of image analysis using a coating layer-side surface photograph to which light is applied.

In particular, a limited roughness glossy portion having a surface roughness Ra of 5 to 25 nm and a limited roughness non-glossy portion having a surface roughness Ra of 50 to 80 nm are provided on the coating layer-side surface. The area ratio of the limited roughness glossy portion to the total area of the limited roughness glossy portion and the limited roughness non-glossy portion is preferably 5 to 50%, more preferably 10 to 45%, and still more preferably 15 to 40%. The limited roughness glossy portion at the above area ratio makes it possible to more reliably maintain the effect of the coating layer and improve the adhesiveness between the separation functional layer and the protective tape.

The area ratio of the limited roughness glossy portion is a value obtained by observing the composite semipermeable membrane on which the coating layer is formed with a microscope (VHX8000 manufactured by KEYENCE CORPORATION), measuring the area of the limited roughness glossy portion having a surface roughness Ra of 5 to 25 nm and the area of the limited roughness non-glossy portion having a surface roughness Ra of 50 to 80 nm using analysis software attached to the device for a randomly selected circle range (3 locations) having a diameter of 36 mm, calculating the area ratio of the limited roughness glossy portion by the following formula, and obtaining the average value thereof.

$$\text{Area ratio (\%) of limited roughness glossy portion} = \text{area of limited roughness glossy portion [mm}^2\text{]}/(\text{area of limited roughness glossy portion [mm}^2\text{]} + \text{area of limited roughness non-glossy portion [mm}^2\text{]}) \times 100\ (\%)$$

The surface roughness adjustment area in which the surface roughness is adjusted as described above may be provided only in the attachment area to which the protective tape is attached, but may be provided at least in the attachment area to which the protective tape is attached of the composite semipermeable membrane. The surface roughness adjustment area is preferably provided over the entire composite semipermeable membrane from the viewpoint of simplifying the production process.

When the hydrophilicity of the surface of the coating layer is enhanced, the water contact angle of the surface of the coating layer may be 40° or less. The water contact angle may be preferably 35° or less, more preferably 30° or less, and still more preferably 25° or less. In the present embodiment, the coating layer has high hydrophilicity corresponding to the water contact angle in the above range. The surface of the coating layer has high hydrophilicity. Therefore, water molecules are likely to preferentially adhere or bond to the surface of the coating layer, and a layer of hydrated water is likely to be formed on the coating layer. Therefore, foulant is less likely to adhere to the surface of the coating layer.

(Spiral membrane element)

Fig. 1 is a perspective view schematically showing an example of a spiral membrane element of the present invention. Fig. 2A is an assembly plan view showing an example of a separation membrane that can be used in the spiral membrane element of the present invention. Fig. 2B is an assembly perspective view showing an example of a separation membrane unit that can be used in the spiral membrane element of the present invention.

For example, as shown in Figs. 1 to 2B, the spiral membrane element of the present invention is a spiral membrane element including a perforated central pipe 5, a roll R including a separation membrane 1 wound around the central pipe 5 and having a bent portion 1f at an inner circumferential-side end portion, and a protective tape T attached along the bent portion 1f.

In the example shown in Fig. 1, the membrane element includes a plurality of membrane leaves L in each of which a permeation-side flow-channel member 3 is interposed between separation membranes 1 opposed to each other; a supply-side flow-channel member 2 interposed between any two of the membrane leaves L; a perforated central pipe 5 around which the membrane leaves L and the supply-side flow-channel members 2 are wound; and a sealing portion for preventing the mixing of supply-side flow-channels with permeation-side flow-channels. In this case, the permeation-side flow-channel in the membrane leaves L can be formed by the permeation-side flow-channel member 3 (also referred to as a permeation-side spacer). An exterior member 15 is provided on the outer periphery of the roll R.

It is also possible to form the supply-side flow-channel and/or the permeation-side flow-channel in the separation membrane 1 itself by providing irregularities or grooves or the like on the surface of the separation membrane 1. In this case, it is possible to omit the supply-side flow-channel member 2 and/or the permeation-side flow-channel member 3.

Fig. 1 shows an example in which the sealing portion includes a both-end sealing portion (not shown) and an outer circumferential-side sealing portion 12. In the sealing parts, the both-end sealing portion is obtained by using an adhesive to seal ends of two sides of each of the membrane leaves L on both sides of the leaf in an axial direction A1. The outer circumferential-side sealing portion 12 is obtained by using an adhesive to seal ends of the outer circumferential-side tip of each of the membrane leaves L. A area surrounded by the separation membranes 1 facing each other, the both-end sealing part, and the outer circumferential-side sealing portion 12 serves as the permeation-side flow-channel. This communicates with an opening 5a of the central pipe 5.

It is preferred to have a central side sealing portion in which the perforated central pipe 5 and the base end side of the both end sealing parts of the membrane leaf L are sealed with an adhesive. The membrane element includes the roll R in which the membrane leaf L and the supply-side flow-channel member 2 are wound around the central pipe 5 with such a central-side sealing portion interposed therebetween. The adhesive is not particularly limited, and any conventionally known adhesive such as a urethane-based adhesive or an epoxy-based adhesive can be used.

In a general membrane element, a first end member 10 having a function of a seal carrier or the like is provided on the upstream side of the roll R, and a second end member 20 having a function of an anti-telescoping device or the like is provided on the downstream side.

In a typical spiral membrane element having a diameter of 8 inches, about 15 to 30 sets of membrane leaves L are wound. When the membrane element is used, the membrane element is accommodated in a pressure vessel (vessel). As shown in Fig. 1, a supply liquid 7 is supplied from one end surface side of the membrane element. The

supplied supply liquid 7 flows along the supply-side flow-channel members 2 into a direction parallel with the axial direction A1 of the central pipe 5, and then is discharged as a concentrated liquid 9 from the other end surface side of the membrane element. In the process in which the supply liquid 7 flows along the supply-side flow-channel members 2, a permeation liquid 8 which has permeated through the separation membranes 1 flows along the permeation-side flow-channel members 3, then flows into the central pipe 5 from the opening 5a, and is discharged from the end of the central pipe 5.

The supply-side flow-channel member 2 generally has a function of ensuring spaces, the spaces being for uniformly supplying a fluid onto a membrane plane. The supply-side flow-channel member 2 to be used may be, for example, a net, a knitted fabric, or a sheet worked to have irregularities. Such a member that has a maximum thickness of about 0.1 to 3 mm can be appropriately used if necessary. The flow-channel member is set on each of both surfaces of the separation membrane 1. Two different flow-channel members are generally used: one thereof is used, on the supply liquid side, as the supply-side flow-channel member 2, and the other is used, on the permeation liquid side, as the permeation-side flow-channel member 3. In the supply-side flow-channel member 2, a thick network flow-channel member having large meshes is used, and in the permeation-side flow-channel member 3, a woven fabric or knitted fabric channel member having fine meshes is preferably used.

As shown in Fig. 1, the central pipe 5 only needs to have the opening 5a around the pipe, and any conventional central pipe can be used. In general, in the case of use in seawater desalination, wastewater treatment or the like, permeated water that has permeated through the separation membrane 1 flows toward the central pipe 5 in the permeation-side flow-channel formed along the permeation-side flow-channel member 3 interposed between any two of the separation membranes 1 facing each other, then flows into the central pipe 5 from the opening 5a, flows in the central pipe 5, and is discharged from the end.

When an RO membrane or NF membrane is used for the purpose of, for example, seawater desalination or waste water treatment, each of the permeation-side flow-channel members 3 is located as shown in Fig. 1 to be interposed between any opposed two of the separation membranes 1 in the membrane leaves L. The permeation-side flow-channel member is required to support the separation membranes from the back sides of the membranes against pressure applied to the membrane, and further to ensure flow-channels for permeation liquid.

In order to ensure such a function, the permeation-side flow-channel member is preferably formed of a tricot knitted fabric, and more preferably a tricot knitted fabric subjected to resin impregnation reinforcement or fusion treatment after the formation of the knitted fabric.

As the separation membrane 1, the composite semipermeable membrane of the present invention described above is used. That is, for the spiral membrane element of the present invention, a composite semipermeable membrane including a porous support and a separation functional layer formed on the porous support is used. A coating layer having different surface roughnesses due to different adhesion amounts of a coating material depending on locations is provided on the surface of the separation functional layer. The composite semipermeable membrane has a coating layer-side surface on which a glossy portion having a surface roughness Ra of 30 nm or less and a non-glossy portion having a surface roughness Ra of 50 nm or more are provided.

Furthermore, as shown in Figs. 2A and 2B, the separation membrane 1 has a bent portion 1f at an inner circumferential-side end portion disposed at an end portion in an inner circumferential-side direction A2 in the roll R. The protective tape T is attached along the bent portion 1f to the coating layer-side surface of the bent portion 1f of the separation membrane 1. In the present invention, the surface roughness Ra of the coating layer-side surface is adjusted to exhibit an effect of increasing the adhesion between the separation functional layer and the protective tape, so that a higher effect can be exhibited when a protective tape having an acrylic, rubber, or silicone adhesive layer, or the like is used although the type of the protective tape T is not particularly limited.

In the separation membrane 1, a surface roughness adjustment area having the glossy portion and the non-glossy portion at an area percentage of 1 : 4 to 4 : 1 may be provided on the front surface, but it is preferable that the surface roughness adjustment area is provided at least in an attachment area to which the protective tape is attached.

When the spiral membrane element is produced, as shown in Fig. 2A, a separation membrane 1 having a predetermined size is disposed such that the separation functional layer is on the upper side, and the protective tape T is attached along the bent portion 1f when the separation membrane 1 is bent along a center line L1. Furthermore, the supply-side flow-channel member 2 is disposed on any surface of the separation membrane 1 with the center line L1 as a boundary line.

As shown in Fig. 2B, the separation membrane 1 is bent along the center line L1 with the separation functional layer of the separation membrane 1 on the inner side, and the supply-side flow-channel member 2 is held in between. Furthermore, the permeation-side flow-channel member 3 is disposed on the porous support side of the separation membrane 1 to form separation membrane units. The plurality of separation membrane units are laminated, and ends of two sides on both sides in the axial direction A1 of the separation membrane 1 and ends of the outer circumferential-side tip are sealed with an adhesive or the like via the permeation-side flow-channel member 3 to form an envelope-like membrane leaf L.

The exterior member is not particularly limited, and examples thereof include various sheets, films, and tapes. If necessary, a fiber reinforced resin (FRP) or the like is used for reinforcement. As a method for forming the fiber reinforced resin, a method for winding a roving in which a fiber is impregnated with a curable resin around the outer periphery of the roll R is preferable.

(Embodiment of removing coating layer)

In the case of removing the coating layer, a spiral membrane element is prepared using a composite semipermeable membrane with a coating layer, and washing water is then passed through the spiral membrane element, so that the coating layer on the separation functional layer can be removed.
The temperature of the washing water is not particularly limited, but is usually about 10 to 40°C, and is preferably 25 to 40°C from the viewpoint of the removal efficiency of the coating layer, and the like.
The pressure at the time of passing water is not particularly limited, but is usually about 0.1 to 3.0 MPa, and is preferably 0.5 to 1.5 MPa from the viewpoint of the removal efficiency of the coating layer, and the like.
It is preferable that the coating layer is completely removed, but the coating layer may be left to such an extent that the water permeability of the spiral separation membrane element is not lowered. Specifically, the content of the hydrophilic resin in the coating layer after water passing treatment is preferably 200 $mg/m^2$ or less, more preferably 100 $mg/m^2$ or less, still more preferably 75 $mg/m^2$ or less, yet still even more preferably 33 $mg/m^2$ or less, and particularly preferably 23 $mg/m^2$ or less.

(Application)

The spiral separation membrane element is suitable for, for example, the production of ultrapure water, and the desalination of brackish water or sea water, and the like, and can contribute to the closing of wastewater by removing and recovering contamination sources or effective substances contained in contamination or the like which causes pollution such as dye wastewater or electrodeposition coating material wastewater from the contamination. The spiral separation membrane element can be used for advanced treatments such as concentration of active ingredients in food applications and the like, and removal of harmful ingredients in water purification and sewage applications and the like. The spiral separation membrane element can be used for wastewater treatment in oil fields and shale gas fields and the like.

## Examples

Hereinafter, the present invention will be described with reference to Examples, but the present invention is not limited to these Examples. In Examples and the like, physical properties and the like were measured or evaluated by the following methods.

(1) Surface roughness Ra of composite semipermeable membrane before formation of coating layer

For a composite semipermeable membrane before the formation of a coating layer, a surface roughness Ra defined by the above formula (Math 1) was calculated using a value measured using an atomic force microscope (AFM) (AFM5300E manufactured by Hitachi High-Tech Science Corporation). An average surface roughness (Ra) is calculated by expanding to three-dimension in order that a center line average roughness (Ra) which is defined in JIS B0601 is applicable to a measured surface. The average surface roughness is the average value of absolute values of deviation of a reference surface to a specified surface. Here, the measured surface refers to a surface shown by all of measured data. The specified surface is a surface to be subjected to roughness measurement, and refers to a specific portion (specified area: 5 um×5 μm) specified by a clip in the measured surface. The reference surface refers to a plane represented by $Z=Z_0$ when the average value of heights of the specified surface is $Z_0$.

(2) Surface roughness Ra of composite semipermeable membrane with coating layer

The composite semipermeable membrane on which the coating layer was formed was observed with a microscope while LED light was applied to the surface of the composite semipermeable membrane. Three glossy portions were selected in the descending order of strongly reflected light within a area of 20 mm×20 mm to specify the positions of the glossy portions. Three non-glossy portions were selected in the ascending order of weakly reflected light to specify the positions of the non-glossy portions.
Surface roughnesses Ra were calculated using a value measured using an atomic force microscope (AFM) in the same manner as in (1) for the specified glossy portions (three locations) and non-glossy portions (three locations),

and the average value of the glossy portions and the average value of the surface roughnesses of the non-glossy portions were obtained.

(3) Scanning electron microscope (SEM) observation

The glossy portion and the non-glossy portion were specified by the method described in the section (2), and observed with a scanning electron microscope (SEM). Representative photographs were shown in Figs. 3 to 5. In Comparative Example 1 (Fig. 5), there was not much difference in glosses, and thus two suitable examples were shown.

(4) Adhesion of protective tape

The composite semipermeable membrane provided with the coating layer was bonded to a vinyl chloride plate having a flat upper surface using a double-sided tape having sufficient pressure-sensitive adhesion. A protective tape (No. 3703F manufactured by Nitto Denko Corporation, width: 50 mm, length: 300 mm) was attached to a coating layer-side surface. A weight of 3 kg was placed on the tape, and the tape was allowed to stand for 5 hours to be bonded to the coating layer-side surface. Thereafter, the vinyl chloride plate was immersed in ion-exchanged water (12 h, 25°C), and drawn up from ion-exchanged water. Excess moisture was removed, and the protective tape was peeled off in a wet state at a peeling rate of 30 mm/min. Tension generated at this time was measured by an autograph (AGS-50NX manufactured by SHIMAZU Corporation). This was repeated 5 times at different sites to obtain the average value.

(5) Measurement of contact angle

A static contact angle was automatically calculated by computer image analysis according to the θ/2 method using Drop Master DM500 manufactured by Kyowa Interface Science Co., Ltd. A drop amount of a solution was 1.5 μL, and a contact angle was measured 10 seconds after the start of dropping of distilled water onto the separation functional layer. At this time, measurement was performed at five locations at random to obtain the average value of the contact angles.

(6) Area ratio of limited roughness glossy portion

The area ratio of the limited roughness glossy portion was obtained by observing the composite semipermeable membrane provided with the coating layer with a microscope (VHX8000 manufactured by KEYENCE CORPORATION), measuring the area of a limited roughness glossy portion having a surface roughness Ra of 5 to 25 nm and the area of a limited roughness non-glossy portion having a surface roughness Ra of 50 to 80 nm using analysis software attached to the device for a randomly selected circle ranges (3 locations) having a diameter of 36 mm, calculating the area ratios of the limited roughness glossy portion according to the following formula, and obtaining the average value thereof.

$$\text{Area ratio (\%) of limited roughness glossy portion} = \text{area of limited roughness glossy portion } [mm^2] / (\text{area of limited roughness glossy portion } [mm^2] + \text{area of limited roughness non-glossy portion } [mm^2]) \times 100\ (\%)$$

<Production example of composite semipermeable membrane (untreated product)>

An aqueous amine solution containing 3.0% by mass of m-phenylenediamine (MPD), 0.15% by mass of sodium dodecylsulfate, 2.15% by mass of triethylamine, 0.31% by mass of sodium hydroxide, 6% by mass of camphorsulfonic acid, and 1% by mass of isopropylalcohol was coated onto a polysulfone porous support layer formed on a polyester non-woven fabric, and then an excess aqueous amine solution was removed to form an aqueous solution coating layer. The surface of the aqueous solution coating layer was then immersed for 7 seconds in an acid chloride solution in which 0.075% by mass of trimesic acid trichloride (TMC) and 0.113% by mass of isophthalic acid chloride (IPC) were dissolved in a naphthenic solvent (Exxsol D40 manufactured by ExxMobil). The excess solution on the surface of the aqueous solution coating layer was then removed, air dried for 20 seconds, and held in a hot air dryer at 140°C for 3 minutes to form the separation functional layer containing a polyamide resin on the porous polysulfone support layer. Then, the composite semipermeable membrane, in which the non-woven substrate, the polysulfone porous support layer, and the

polyamide separation functional layer were arranged in this order, was formed. The evaluation results are shown in Table 1. The surface roughness Ra of the separation functional layer of the composite semipermeable membrane was 71 nm.

(Example 1)

A coating liquid was obtained by uniformly mixing and dissolving 0.13% by mass of polyvinyl alcohol (PVA) (JC-25 manufactured by JAPAN VAM & POVAL CO., LTD., saponification degree ≥ 99%), 0.27% by mass of an amphoteric hydrophilic polymer (LAMBIC-1000W manufactured by Osaka Organic Chemical Industry Ltd.), 11% by mass of isopropyl alcohol (IPA), and 88.6% by mass of water. The surface of the separation functional layer of the composite semipermeable membrane produced above was immersed in the coating liquid for 10 seconds. Thereafter, the separation functional layer was air-dried for 30 seconds, and further held in a hot air dryer at 120°C for 2 minutes to form a coating layer. The evaluation results are shown in Table 1.

(Example 2)

A coating layer was formed on a composite semipermeable membrane under the same conditions as in Example 1 except that the content of IPA was changed and the composition of a coating liquid was as shown in Table 1 in Example 1. The evaluation results are shown in Table 1.

(Example 3)

A coating liquid was obtained by uniformly mixing and dissolving 0.4% by mass of polyvinyl alcohol (PVA) (JC-25 manufactured by JAPAN VAM & POVAL CO., LTD., saponification degree ≥ 99%), 10% by mass of isopropyl alcohol (IPA), and 89.6% by mass of water. The surface of the separation functional layer of the composite semipermeable membrane produced above was immersed in the coating liquid for 7 seconds. Thereafter, the separation functional layer was air-dried for 30 seconds, and further held in a hot air dryer at 120°C for 2 minutes to form a coating layer. The evaluation results are shown in Table 1.

(Example 4)

A coating layer was formed on a composite semipermeable membrane under the same conditions as in Example 3 except that the content of IPA was changed and the composition of a coating liquid was as shown in Table 1 in Example 3. The evaluation results are shown in Table 1.

(Example 5)

A coating layer was formed on a composite semipermeable membrane under the same conditions as in Example 1 except that the total content of a hydrophilic resin was changed and the composition of a coating liquid was as shown in Table 1 in Example 1. The evaluation results are shown in Table 1.

(Comparative Example 1)

A coating layer was formed on a composite semipermeable membrane under the same conditions as in Example 3 except that the content of IPA was changed and the composition of a coating liquid was as shown in Table 1 in Example 3. The evaluation results are shown in Table 1. The composite semipermeable membrane obtained in Comparative Example 1 had substantially the same gloss on the entire surface, and as a result of measuring surface roughnesses Ra at 3 locations, the maximum surface roughness Ra was 48 nm.

(Comparative Example 2)

A coating layer was formed on a composite semipermeable membrane under the same conditions as in Example 1 except that the total content of a hydrophilic resin and the content of IPA were changed and the composition of a coating liquid was as shown in Table 1 in Example 1. The evaluation results are shown in Table 1. The composite semipermeable membrane obtained in Comparative Example 2 had substantially the same gloss on the entire surface, and as a result of measuring surface roughnesses Ra at 3 locations, the maximum surface roughness Ra was 35 nm.

[Table 1]

| | | Example 1 | Example 2 | Example 3 | Example 4 | Example 5 | Comparative Example 1 | Comparative Example 2 | Untreated product |
|---|---|---|---|---|---|---|---|---|---|
| Composition of coating liquid (% by mass) | PVA | 0.13 | 0.13 | 0.4 | 0.4 | 0.7 | 0.4 | 0.7 | - |
| | LAMBIC | 0.27 | 0.27 | 0 | 0 | 0 | 0 | 0 | - |
| | IPA | 11 | 36 | 10 | 30 | 10 | 42 | 42 | - |
| | Water | 88.6 | 63.6 | 89.6 | 69.6 | 80.3 | 57.6 | 57.3 | - |
| Glossy portion Ra | (nm) | 10 | 11 | 11 | 25 | 11 | 48 | 35 | - |
| Non-glossy portion Ra | (nm) | 68 | 69 | 67 | 60 | 67 | Absence | Absence | 71 |
| Area ratio of limited roughness glossy portion | (%) | 21 | 6 | 36 | 7 | 47 | Calculation is impossible 1) | Calculation is impossible 1) | 0 |
| Adhesion | (N) | 2.3 | 1.2 | 1.3 | 1.0 | 1.1 | 0.7 | 0.5 | - |
| Contact angle | (degrees) | 25 | 22 | 43 | 40 | 42 | 40 | 39 | 50 |
| 1)A limited roughness glossy portion and a limited roughness non-glossy portion are absent. | | | | | | | | | |

As shown in the results of Table 1, in Examples 1 to 5 in which the glossy portion and the non-glossy portion were provided on the coating layer-side surface, adhesion between the separation functional layer provided with the coating layer and the protective tape could be increased while the effect (improvement in contact angle) of the coating layer is maintained to some extent.

Meanwhile, in Comparative Examples 1 and 2 having no glossy portion and no non-glossy portion, adhesive was reduced.

The present invention can enhance adhesion between a separation functional layer provided with a coating layer and a protective tape while maintaining the effect of the coating layer to some extent. Therefore, the present invention is a particularly useful technique when a coating layer containing various hydrophilic resins is provided for the purpose of improving durability at the time of processing into a membrane element, improving fouling resistance (contamination resistance), improving a separation function and permeation performance, and the like.

## Claims

**1.** A composite semipermeable membrane comprising:

a porous support;
a separation functional layer formed on the porous support; and
a coating layer provided on a surface of the separation functional layer, the coating layer having different surface roughnesses due to different adhesion amounts of a coating material depending on locations,
wherein the composite semipermeable membrane has a coating layer-side surface on which a glossy portion having a surface roughness Ra of 30 nm or less and a non-glossy portion having a surface roughness Ra of 50 nm or more are provided.

**2.** The composite semipermeable membrane according to claim 1, wherein the composite semipermeable membrane includes a surface roughness adjustment area having the glossy portion and the non-glossy portion at an area percentage of 1 : 4 to 4 : 1 at least in an attachment area to which a protective tape is attached.

**3.** The composite semipermeable membrane according to claim 1, wherein the surface roughness Ra of the glossy portion is 5 to 25 nm, and the surface roughness Ra of the non-glossy portion is 50 to 80 nm.

**4.** The composite semipermeable membrane according to claims 1, comprising a limited roughness glossy portion having a surface roughness Ra of 5 to 25 nm and a limited roughness non-glossy portion having a surface roughness Ra of 50 to 80 nm, each provided on the coating layer-side surface,
wherein an area ratio of the limited roughness glossy portion to a total area of the limited roughness glossy portion and the limited roughness non-glossy portion is 5 to 50%.

**5.** The composite semipermeable membrane according to claim 1, wherein the separation functional layer is formed of a polyamide-based resin, and the coating material contains a hydrophilic resin.

**6.** A spiral membrane element comprising: a perforated central pipe; a roll including a separation membrane wound around the central pipe and having a bent portion at an inner circumferential-side end portion; and a protective tape attached along the bent portion,

wherein the separation membrane is a composite semipermeable membrane including a porous support and a separation functional layer formed on the porous support,
a coating layer is provided on a surface of the separation functional layer, the coating layer having different surface roughnesses due to different adhesion amounts of a coating material depending on locations,
the composite semipermeable membrane has a coating layer-side surface on which a glossy portion having a surface roughness Ra of 30 nm or less and a non-glossy portion having a surface roughness Ra of 50 nm or more are provided, and
the protective tape is attached to the coating layer side-surface of the bent portion of the separation membrane.

**7.** The spiral membrane element according to claim 6, wherein the separation membrane includes a surface roughness adjustment area having the glossy portion and the non-glossy portion at an area percentage of 1 : 4 to 4 : 1 at least in an attachment area to which the protective tape is attached.

**8.** The spiral membrane element according to claim 6, comprising a limited roughness glossy portion having a surface roughness Ra of 5 to 25 nm and a limited roughness non-glossy portion having a surface roughness Ra of 50 to 80 nm, each provided on the coating layer-side surface,
wherein an area ratio of the limited roughness glossy portion to a total area of the limited roughness glossy portion and the limited roughness non-glossy portion is 5 to 50%.

Fig.1

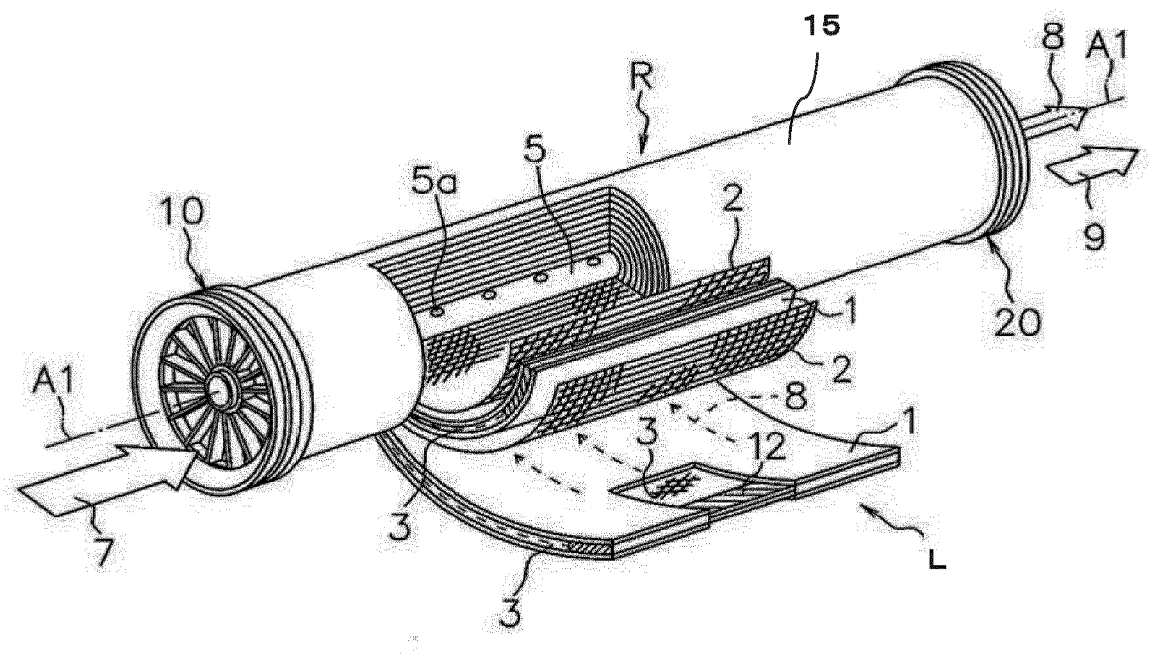

Fig.2A

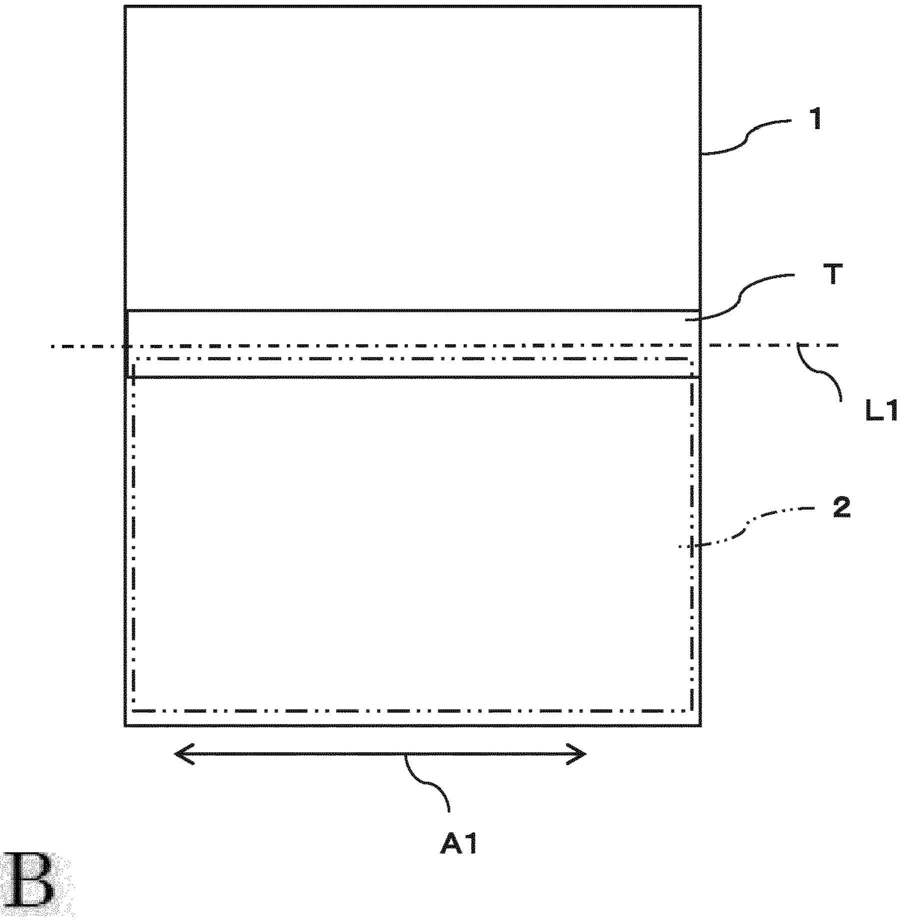


Fig.2B

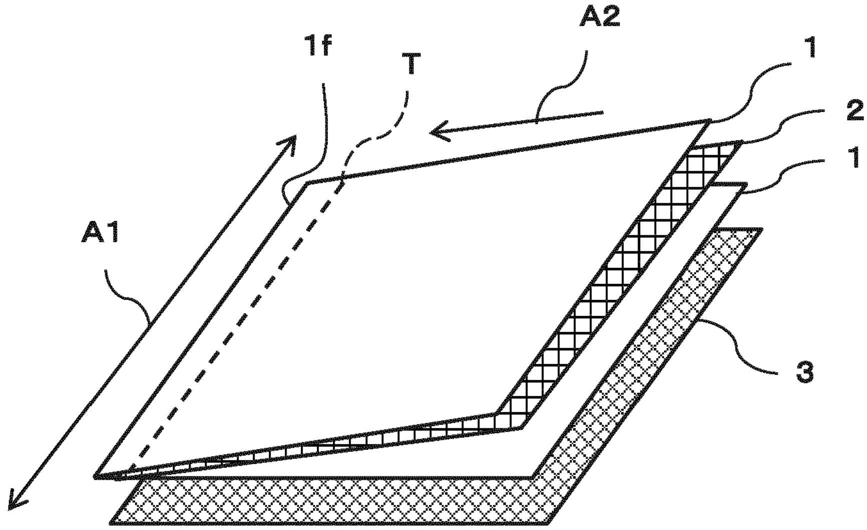

Fig.3

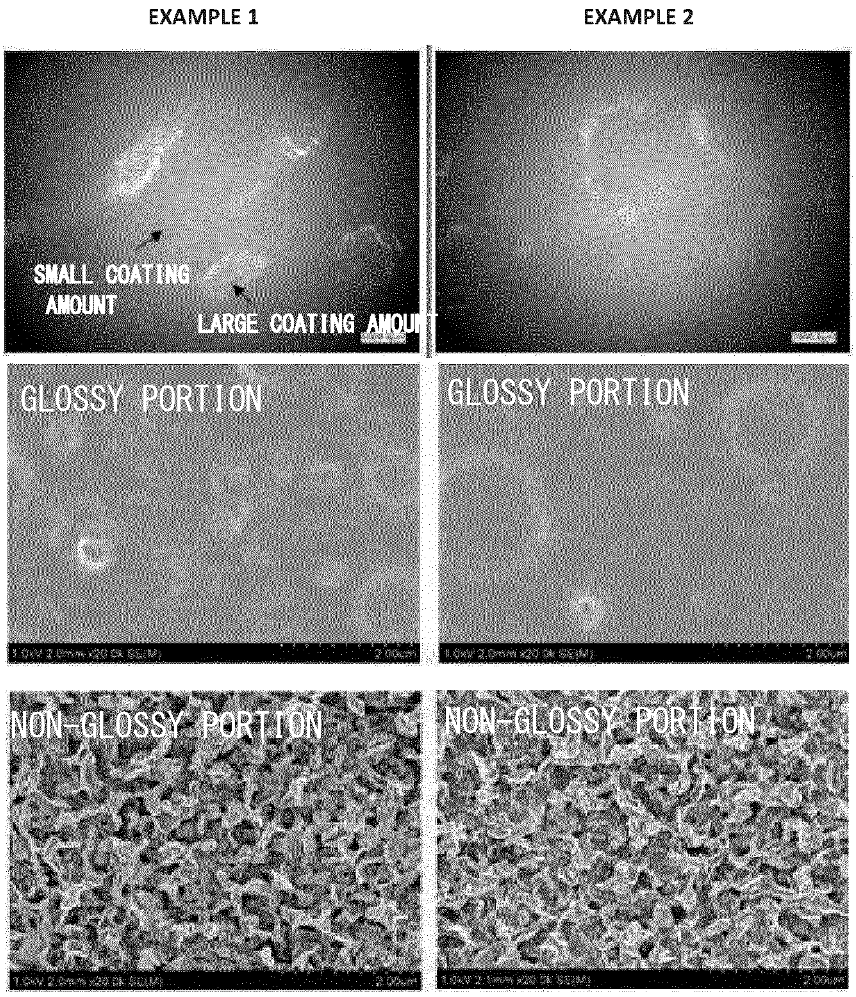
EXAMPLE 1
EXAMPLE 2
SMALL COATING AMOUNT
LARGE COATING AMOUNT
GLOSSY PORTION
GLOSSY PORTION
NON-GLOSSY PORTION
NON-GLOSSY PORTION

Fig.4

EXAMPLE 3

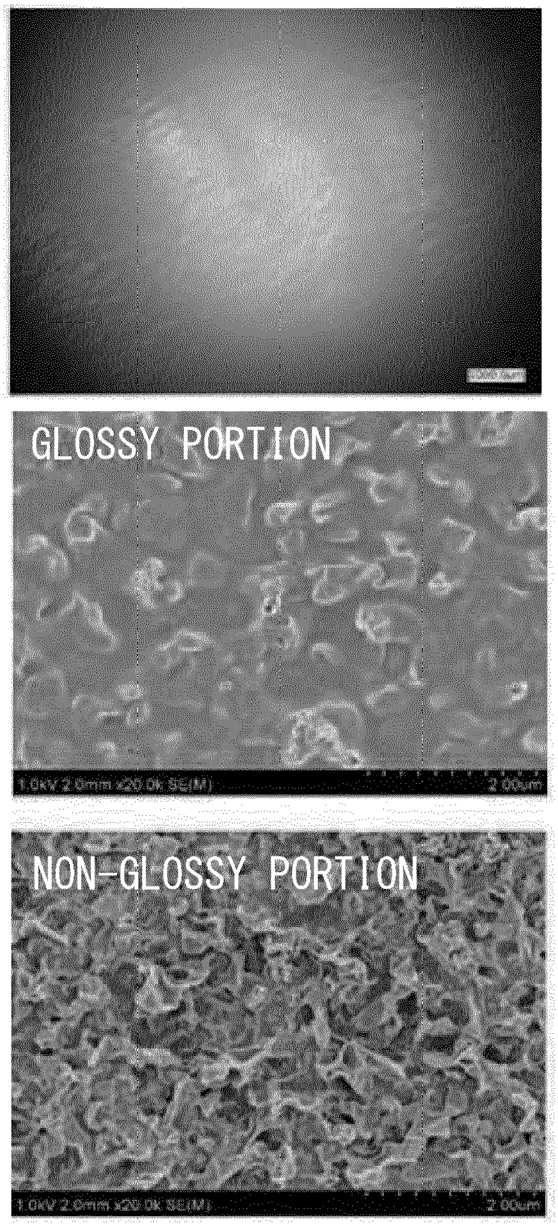

Fig.5

COMPARATIVE EXAMPLE 1

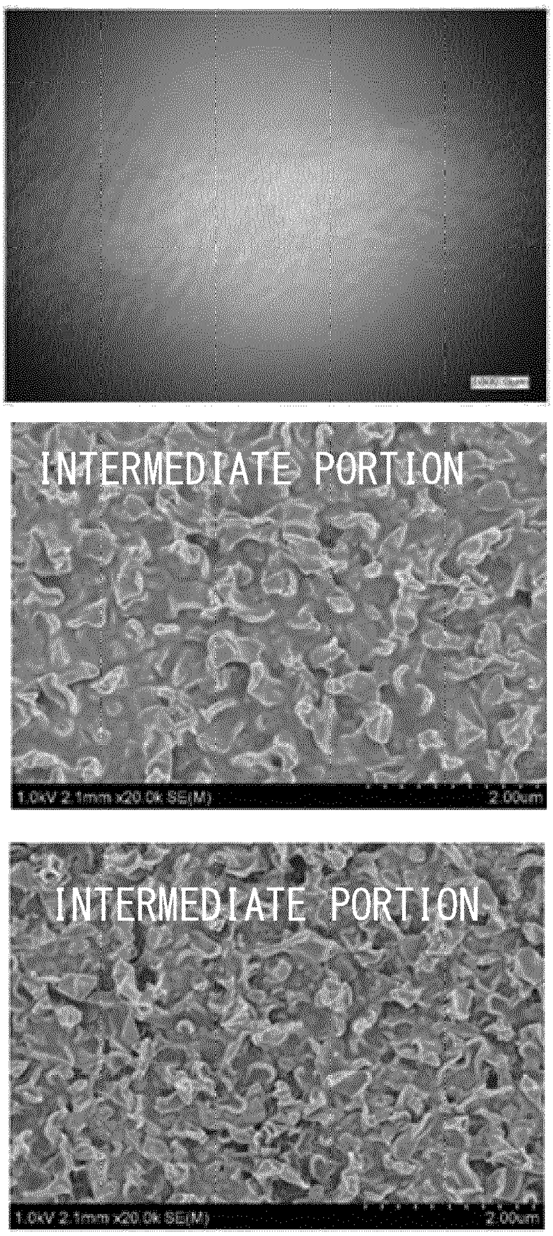

Europäisches Patentamt
European Patent Office
Office européen des brevets

# EUROPEAN SEARCH REPORT

Application Number
EP 23 15 9408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 47566 A (NITTO DENKO CORP) 23 February 1999 (1999-02-23) * paragraphs [0027] - [0028] * ----- | 1-5 | INV. B01D63/10 B01D67/00 B01D69/12 B01D71/38 B01D71/56 |
| X | JP H10 249342 A (NITTO DENKO CORP) 22 September 1998 (1998-09-22) * paragraph [0032] * ----- | 1-5 | |
| X<br>Y | US 2016/236156 A1 (ROZENBAOUM EVGUENI [US] ET AL) 18 August 2016 (2016-08-18) * paragraphs [0004] - [0007], [0057] * ----- | 1-8<br>1-8 | |
| Y | WO 2016/052171 A1 (TORAY INDUSTRIES [JP]) 7 April 2016 (2016-04-07) * page 22, 3rd paragraph of enclosed machine translation * ----- | 1-8 | |
| Y | WO 2020/059861 A1 (TOPPAN PRINTING CO LTD [JP]) 26 March 2020 (2020-03-26) * Par [0237] of enclosed machine translation * ----- | 1-8 | TECHNICAL FIELDS SEARCHED (IPC) |
| Y | JP 2012 180422 A (SUMITOMO CHEMICAL CO) 20 September 2012 (2012-09-20) * paragraph [0171] * ----- | 1-8 | B01D |
| A | JP 2015 134310 A (FUJIFILM CORP) 27 July 2015 (2015-07-27) * paragraph [0126] * ----- | 1-8 | |

The present search report has been drawn up for all claims

1

| Place of search | Date of completion of the search | Examiner |
|---|---|---|
| Munich | 7 July 2023 | Williams, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 15 9408

This annex lists the patent family members relating to the patent documents cited in the above-mentioned European search report. The members are as contained in the European Patent Office EDP file on
The European Patent Office is in no way liable for these particulars which are merely given for the purpose of information.

07-07-2023

| Patent document cited in search report | Publication date | Patent family member(s) | Publication date |
|---|---|---|---|
| JP H1147566 A | 23-02-1999 | NONE | |
| JP H10249342 A | 22-09-1998 | NONE | |
| US 2016236156 A1 | 18-08-2016 | NONE | |
| WO 2016052171 A1 | 07-04-2016 | CN 106715120 A | 24-05-2017 |
| | | JP 6657953 B2 | 04-03-2020 |
| | | JP WO2016052171 A1 | 20-07-2017 |
| | | KR 20170063439 A | 08-06-2017 |
| | | KR 20210120121 A | 06-10-2021 |
| | | WO 2016052171 A1 | 07-04-2016 |
| WO 2020059861 A1 | 26-03-2020 | CN 112996438 A | 18-06-2021 |
| | | EP 3854314 A1 | 28-07-2021 |
| | | US 2021186652 A1 | 24-06-2021 |
| | | WO 2020059861 A1 | 26-03-2020 |
| JP 2012180422 A | 20-09-2012 | JP 5888864 B2 | 22-03-2016 |
| | | JP 2012180422 A | 20-09-2012 |
| JP 2015134310 A | 27-07-2015 | JP 6276598 B2 | 07-02-2018 |
| | | JP 2015134310 A | 27-07-2015 |
| | | WO 2015107776 A1 | 23-07-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9034686 A
- JP 2018124103 A
- JP 2000354743 A
- JP 2006068644 A
- JP 58024303 A
- JP 1180208 A
- JP H985068 A
- JP H78770 A